# FASCICULE DE BREVET EUROPEEN

(11) **EP 2 030 066 B1**
(45) Date de publication et mention de la délivrance du brevet: **25.12.2013**
(21) Numéro de dépôt: 07729875.0
(22) Date de dépôt: 04.06.2007
(51) Int. Cl.: G02B 23/12, G02B 13/16, G02B 13/06

(54) **SYSTÈME OPTRONIQUE PASSIF TRICHAMP**
PASSIVES OPTRONISCHES DREI-FELD-SYSTEM
PASSIVE THREE-FIELD OPTRONIC SYSTEM

(30) Priorité: 16.06.2006 FR 0605385
(43) Date de publication de la demande: 04.03.2009
(73) Titulaire: Thales, 92200 Neuilly-Sur-Seine (FR)
(72) Inventeur: NORMANDIN, Xavier, F-75015 Paris (FR); FORESTIER, Bertrand, F-75015 Paris (FR)
(74) Mandataire: Henriot, Marie-Pierre
(86) Numéro de dépôt international: PCT/EP2007/055488
(87) Numéro de publication internationale: WO 2007/144290

(56) Documents cités:
- WO-A-2005/119330
- FR-A- 2 708 353
- FR-A1- 2 830 339
- US-A- 5 548 439
- US-A- 5 600 491
- US-A- 6 115 196

## Description

Le domaine de l'invention est celui des systèmes d'imagerie passive bichamp, notamment des systèmes infra-rouge (IR) en bande 3-5 µm ou en bande 8-12 µm utilisés pour l'observation GC (Grand Champ) à des fins de détection d'une cible et PC (Petit Champ) à des fins de reconnaissance et d'identification de la cible.

Un grand champ est typiquement compris entre 8° à 10°, un petit champ entre 2° à 4°.

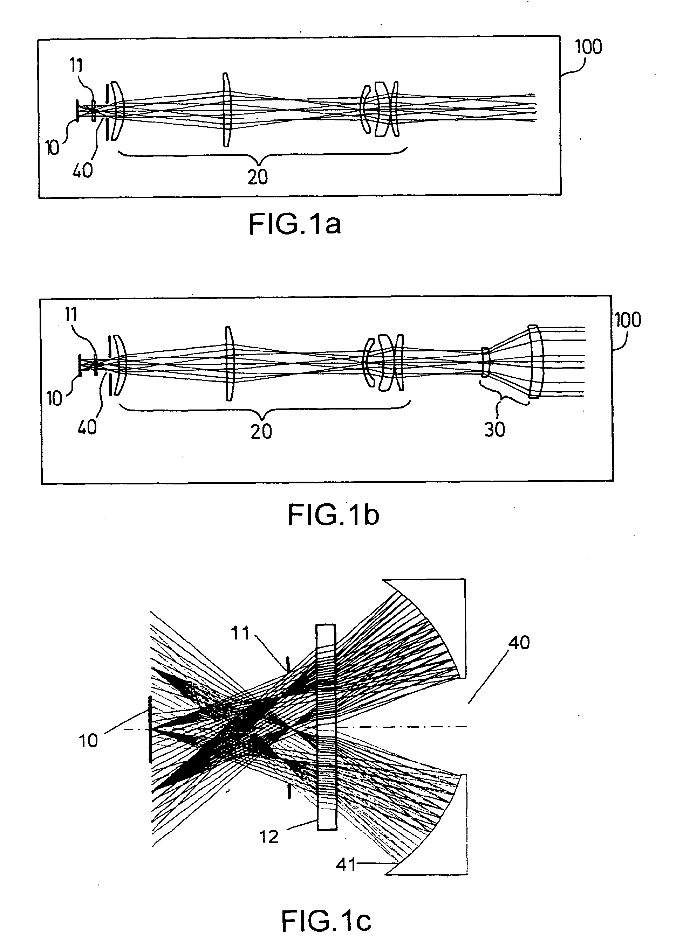

Un système 100 d'imagerie passive IR bi-champ PC et GC, décrit en relation avec les figures 1a à 1c comprend typiquement sur un même axe optique :
- des moyens de détection comportant un détecteur matriciel IR 10 à deux dimensions placé dans un cryostat pour être refroidi,
- un diaphragme d'ouverture 40 situé à l'extérieur du cryostat (comprenant notamment un diaphragme froid 11 et fermé par un hublot 12), mais proche de celui-ci, aussi désigné pupille d'imagerie, bordé a priori par un miroir 41 de réduction du rayonnement thermique parasite de structure, afin d'optimiser le comportement photométrique de l'ensemble, comme illustré figure 1c,
- des moyens de formation de l'image désignés ré-imageur 20, comprenant un ensemble de lentilles aptes à réaliser une conjugaison scène - détecteur tout en garantissant une pupille d'entrée et une pupille de sortie réelles ; cette fonctionnalité de transport de pupille impose la présence d'un plan focal intermédiaire dans la combinaison optique,
- un afocal 30 amovible de grossissement 3 typiquement, utilisé en mode PC ; le fait que la pupille d'entrée du ré-imageur soit réelle permet de limiter les diamètres des composants de l'afocal 30.

On entend par élément amovible, un élément apte à être retiré puis replacé en tant que de besoin.
En mode GC dont un exemple de configuration est illustré figure 1a, le système ne comprend pas l'afocal 30 alors qu'en mode PC un afocal 30 grossissant est placé sur l'axe optique en amont du ré-imageur 20 comme illustré dans l'exemple de la figure 1 b. On considère que le sens amont-aval correspond au sens de propagation de la lumière arrivant de l'extérieur pour être focalisée sur le détecteur, c'est-à-dire de droite à gauche sur l'ensemble des figures.

On souhaite assurer en outre une fonction de veille IR passive panoramique, c'est-à-dire très grand champ (TGC), avec typiquement 90° de champ horizontal (en gisement) et 30° de champ vertical (en site). Les systèmes optroniques de veille passive sont des systèmes ne nécessitant pas d'émission de rayonnement, et sont par conséquent discrets.

On souhaite assurer cette fonction de veille en utilisant le même détecteur, notamment pour limiter le coût.

Le dispositif optique du système bi-champ présente un champ instantané utile limité à 10° horizontalement et verticalement alors que l'on souhaite pouvoir faire une observation dans un champ panoramique.

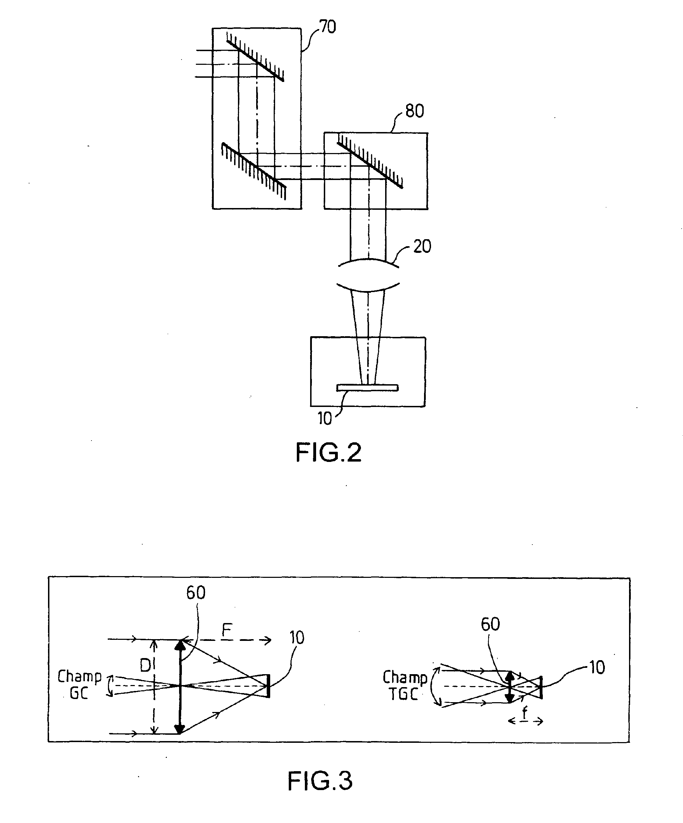

Une première solution illustrée figure 2 consiste à associer un système bi-champ existant à des miroirs de balayage 70 et de contre-balayage 80 animés de mouvements de rotation : les miroirs balaient la scène et la renvoient vers le système bi-champ fixe 20 de façon à pouvoir observer la scène dans le TGC d'observation, les figures de balayage étant optimisées en fonction notamment du champ d'observation et de la vitesse de balayage. Un tel dispositif de balayage est par exemple décrit dans le brevet FR 2 830 339. La rotation s'effectue à une vitesse angulaire déterminée ; celle-ci est limitée en particulier par le temps d'intégration du détecteur typiquement de 3 msec (2 msec de temps d'intégration et 1 msec de temps de lecture). Cette vitesse angulaire est comprise par exemple entre 250° et 350°/seconde dans un sens pendant 14ms pour acquérir l'image puis dans l'autre sens pendant 6ms pour reprendre la position initiale. Il n'est alors pas possible d'assurer une cadence de balayage d'au moins 0,5 Hz nécessaire pour pouvoir mettre en oeuvre des algorithmes de détection automatique sur des cibles opérationnelles (chars, missiles...).

Une autre solution consiste à augmenter le champ du système pour couvrir le très grand champ, en diminuant la focale F du système. De façon classique, cette diminution de F est réalisée pour un nombre d'ouverture F/D du système constant. Elle conduit donc à une réduction du diamètre D de la pupille d'entrée 60 (figures 3). Cela se traduit par une forte dégradation de la sensibilité du système.

Le but de l'invention est d'obtenir un système optronique permettant d'assurer des fonctions de reconnaissance et identification, de détection et de veille passive avec un même détecteur IR sans les inconvénients susmentionnés.

Selon l'invention un dispositif optique bi-champ apte à couvrir un petit et un grand champ, est couplé avec un dispositif de changement de champ à l'intérieur du ré-imageur permettant d'obtenir un grand champ plus important, de l'ordre de 30° X 30° et l'ensemble est installé sur une plate-forme à balayage permettant de couvrir finalement un très grand champ horizontal de 90°. Le dispositif optique comprend en outre un dispositif de contre-balayage permettant de stabiliser l'image pendant la prise de vue.

Plus précisément, l'invention a pour objet un système d'imagerie passive comprenant :
- un détecteur matriciel IR,
- un dispositif optique bi-champ, apte à former une image sur le détecteur et comportant sur un axe optique
   des moyens de formation de l'image,
   un afocal amovible de grossissement G déterminé placé en amont des moyens de formation de l'image,
   un diaphragme d'ouverture disposé entre le détecteur et les moyens de formation de l'image.

Il est principalement caractérisé en ce qu'il comprend des moyens de balayage en gisement de l'ensemble détecteur et dispositif optique bichamp, en ce que le diaphragme d'ouverture est amovible et en ce que le dispositif optique comprend en outre, un miroir de contre-balayage apte à être bloqué, disposé en amont des moyens de formation de l'image, et en ce que les moyens de formation de l'image comprennent des moyens pour obtenir un troisième champ, le miroir de contre-balayage et les moyens pour obtenir un troisième champ étant disposés sur ledit axe optique et aptes à former une image sur ledit détecteur en vue d'obtenir un système d'imagerie tri-champ.

On obtient ainsi un système IR tri-champ utilisant un seul détecteur et un seul axe optique.

Une fois le diaphragme d'ouverture escamoté, la pupille du système est formée par le diaphragme froid du cryostat ; ceci permet de réduire le nombre d'ouverture F/D en configuration TGC et donc de conserver une taille de pupille d'entrée du ré-imageur quasiment constante tout en augmentant le champ.

Le champ résultant est de l'ordre de 30°. Il est suffisamment grand pour qu'une cadence classique de 1 Hz soit suffisante pour un balayage de la zone de 90° x 30°.

De plus le système obtenu est compact. Il permet ainsi d'utiliser en entrée un hublot de dimension acceptable : 130 mm X 75 mm au lieu de 75 mm X 75 mm pour un système bi-champ. Alors que la solution de l'art antérieur selon laquelle le détecteur est fixe par rapport au dispositif de balayage nécessite un hublot de très grande taille, de l'ordre de 60 cm pour couvrir le débattement angulaire du très grand champ.

Les moyens pour obtenir un autre champ comportent des composants optiques amovibles aptes à être insérés sur l'axe optique entre le dispositif de contre-balayage et le détecteur, ou des éléments optiques mobiles en translation selon l'axe optique ; ces éléments optiques de changement de champ sont disposés de façon à maintenir quasiment fixe la position de la pupille d'entrée du ré-imageur.

Selon une caractéristique de l'invention, le miroir de contre-balayage est placé entre les moyens de formation de l'image et l'afocal.

Selon une autre caractéristique de l'invention, les moyens de formation de l'image présentant une ouverture déterminée, les moyens pour obtenir un autre champ modifient cette ouverture.

D'autres caractéristiques et avantages de l'invention apparaîtront à la lecture de la description détaillée qui suit, faite à titre d'exemple non limitatif et en référence aux dessins annexés dans lesquels :
les figures 1 déjà décrites représentent schématiquement un système bi-champ, en configuration GC (figure 1a) et PC (figure 1b), et un zoom sur le cryostat et le diaphragme d'ouverture (figure 1c),
la figure 2 déjà décrite représente schématiquement un système tri-champ connu,
les figures 3 déjà décrites illustrent schématiquement l'effet du changement de focale sur le diamètre de la pupille d'entrée d'un système optique fonctionnant à nombre d'ouverture constant,
les figures 4 représentent schématiquement un système tri-champ selon l'invention, en configuration PC (figure 4a), GC (figure 4b) et TGC (figure 4c),
la figure 5 représente schématiquement la plate-forme de balayage et le dispositif de contre-balayage contrôlés par l'unité de traitement.

D'une figure à l'autre, les mêmes éléments sont repérés par les mêmes références.

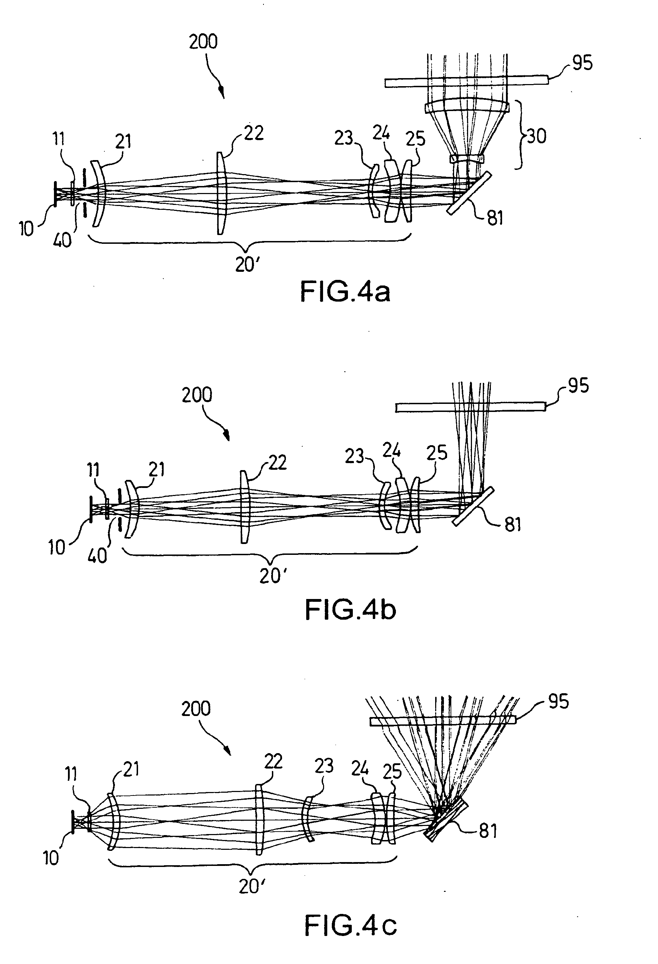

En référence aux figures 4, le système d'imagerie passive 200 selon l'invention comprend les éléments suivants dont certains seulement sont utilisés en fonction du mode choisi :
- des moyens de détection comportant un détecteur matriciel 10 IR à deux dimensions placé de manière classique dans un dispositif de refroidissement tel qu'un cryostat, utilisés pour les trois modes PC, GC et TGC,
- un ré-imageur 20' adaptable pour passer d'une configuration commune aux modes PC ou GC à une configuration pour le mode TGC,
- un afocal 30 amovible de grossissement G (G=3 par exemple), utilisé seulement en mode PC,
- un diaphragme d'ouverture 40 amovible utilisé seulement en mode PC ou GC,
- un dispositif de contre-balayage utilisé en mode TGC, comprenant un miroir de contre-balayage apte à être bloqué dans une position fixe pour les modes PC et GC.

Ces éléments qui sont sur un même axe optique, sont montés sur une plate-forme 70' équipée de moyens de rotation en gisement pour obtenir le balayage horizontal de 90° du mode TGC ; cette plate-forme est bloquée dans une position fixe pour les modes PC et GC.

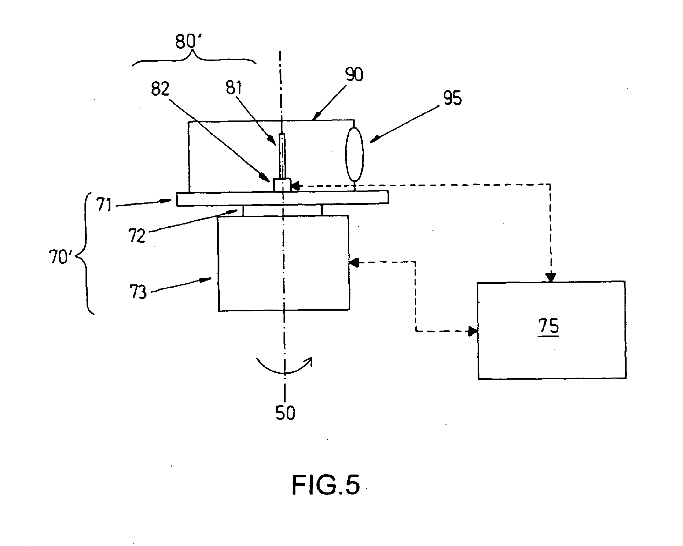

La plate-forme de balayage 70' et le dispositif de contre-balayage 80' sont contrôlés par une unité de traitement 75 et sont représentés figure 5.

Le détecteur matriciel 10 comprend par exemple 240 x 320 pixels. Ce détecteur sensible par exemple dans la bande 3-5 µm peut être composé d'un matériau de Mercure, Cadmium et Tellure (HgCdTe). D'autres matériaux peuvent être utilisés comme des matériaux multi-puits quantiques dans les composés Arséniure de Gallium/Arséniure de gallium et d'Aluminium (AsGa/AsGaAl); le composé Antimonure d'Indium (InSB) peut également être utilisé.

Le ré-imageur 20' tel qu'utilisé en modes PC et GC comprend un groupe de N lentilles divergentes, convergentes disposées par exemple de la façon suivante : un groupe de lentilles permettant le transport d'image, comme par exemple les trois lentilles 21, 22, 23 les plus en aval sur les figures 4, et un groupe de lentilles formant un oculaire, tel que les deux lentilles 24, 25 en aval du miroir de contre-balayage ; il comprend en outre des moyens pour faire varier le champ.

Selon un premier mode de réalisation, le ré-imageur 20' est de type zoom. Les moyens pour faire varier le champ comprennent les lentilles convergentes 22 et 23 désignées respectivement compensateur 22 et variateur 23 et des moyens de translation de ces lentilles sur l'axe optique en une position variable selon le mode choisi. Le variateur permet principalement d'obtenir une variation de la focale du système optique et le compensateur est un élément permettant principalement de maintenir le plan de focalisation quasiment fixe. En mode TGC (figure 4c), le variateur 23 est dans sa position maximale en aval et le compensateur 22 dans sa position maximale en amont, ils permettent ainsi d'obtenir un champ de 30°. Pour les modes PC (figure 4a) ou GC (figure 4b), le variateur 23 est dans sa position maximale en amont et le compensateur 22 dans sa position maximale en aval. En outre, la combinaison optique du variateur 22 et du compensateur 23 est calculée de façon à minimiser la taille nécessaire du miroir de contre-balayage 81 en maintenant l'image de la pupille au voisinage de celui-ci.

Selon un deuxième mode de réalisation, les moyens pour faire varier le champ comprennent des éléments optiques amovibles ; il s'agit par exemple d'un groupe de lentilles qui est inséré sur l'axe optique entre l'oculaire et le transport constituant le ré-imageur 20' pour obtenir un champ de 30° et retiré pour passer en modes PC ou GC. Il est par exemple monté sur une structure mobile en rotation de façon à pouvoir être placé sur l'axe optique ou escamoté selon le mode choisi.

L'afocal 30 comporte typiquement une lentille divergente et une lentille convergente. On rappelle qu'un afocal est un élément optique tel qu'un faisceau collimaté d'un côté est encore collimaté de l'autre côté après avoir traversé l'afocal. Il est inséré sur l'axe optique en amont du ré-imageur en mode PC et retiré pour les modes GC et TGC.

Le diaphragme d'ouverture 40 est utilisé seulement en mode PC ou GC avec une ouverture d'environ F/3 ; il est retiré en mode TGC pour lequel l'ouverture 11 du cryostat joue le rôle de pupille. L'escamotage du diaphragme d'ouverture 40 permet par conséquent de réduire le nombre d'ouverture F/D du système à environ F/1.2 en position TGC, et donc de conserver une taille de pupille d'entrée du ré-imageur quasiment constante tout en augmentant le champ.

Le dispositif de contre-balayage 80' permet de compenser les mouvements de l'image dus au balayage de la scène par la plate-forme 70' ; il permet de stabiliser l'image pendant l'acquisition des images. Il comprend par exemple un miroir 81 orienté au repos à 45° sur l'axe optique, associé à des moyens de rotation dudit miroir. La rotation a une amplitude de ± 15° pour couvrir un champ de 30°. Ce miroir 81 qui a aussi pour effet de couder le trajet du faisceau permet aussi de réduire l'encombrement du dispositif optique. L'unité de traitement 75 synchronise l'acquisition des images par les moyens de détection avec les mouvements de contre-balayage. Plus précisément, le temps d'acquisition d'une image étant composé d'une part d'un temps d'intégration Tᵢₙₜ par le détecteur 10 et d'autre part d'un temps T_{lect} nécessaire à la lecture de l'information fournie par le détecteur, les moyens 80' de contre-balayage assurent un mouvement de rotation contraire à celui de la plate-forme 70' de balayage pendant le temps Tᵢₙₜ et permettent de garder la zone observée fixe sur le détecteur pendant le temps nécessaire à l'intégration du signal et d'éviter ainsi un effet de flou sur l'image. Ils reviennent à leur position initiale pendant le temps T_{lect}.

Les éléments précédemment décrits sont installés dans un boîtier 90 fixé à la plate-forme de balayage 70'. Le boîtier comprend éventuellement d'autres éléments. Il est muni d'au moins une fenêtre transparente ou hublot 95 de préférence inclinée sur l'axe optique afin d'éviter l'effet Narcisse ; il est par exemple incliné à 18° environ. La dimension verticale du hublot, conditionnée par les faisceaux PC est de l'ordre de 75 mm. Sa dimension horizontale est de l'ordre de 130 mm pour permettre aux faisceaux TGC de passer sans vignettage, ce qui représente un surdimensionnement acceptable par rapport au dimensionnement d'origine de 75 mm. On obtient finalement un hublot de forme oblongue de 130 mm X 75 mm. Le hublot est typiquement à une distance de 100 mm du miroir de contre-balayage.

La plate-forme de balayage 70' dont un exemple est représenté figure 5, est équipée de moyens de rotation assurés par exemple par des axes cardans ayant chacun un degré de liberté. La plate-forme 70' est constituée d'un support 71 sur lequel est monté l'ensemble détecteur-dispositif optique placé dans le boîtier 90, d'un joint tournant 72 et d'un moteur 73 permettant la rotation du support selon un axe vertical 50. Le détecteur et les lentilles du ré-imageur qui sont situés sur un axe perpendiculaire au plan de la figure derrière le miroir 81, ne sont pas représentés pour ne pas surcharger la figure. Un second moteur 82 permet d'entraîner le miroir de contre-balayage 81 sur le même axe de rotation 50 que celui du support global. Les deux moteurs sont commandés par une unité de traitement 75 qui permet de gérer le contre-balayage.

On va à présent décrire le système 200 selon l'invention pour chaque mode.

En mode PC, le système décrit en relation avec la figure 4a comprend :
- les moyens de détection comportant le détecteur matriciel 10 IR à deux dimensions placé de manière classique dans le dispositif de refroidissement,
- le diaphragme d'ouverture 40 bordé du miroir de réduction de flux,
- le ré-imageur 20' en configuration commune PC/GC s'il s'agit d'un ré-imageur de type zoom, sans les éléments spécifiques au TGC si le ré-imageur est équipé d'un dispositif de changement de champ par insertion d'éléments optiques dans la combinaison,
- l'afocal 30 de grossissement G (G=3 par exemple),
- le dispositif de contre-balayage 80' bloqué dans une position fixe commune PC/GC.

Ces éléments sont montés sur la plate-forme 70' bloquée dans une position fixe commune PC/GC.

En mode GC, le système décrit en relation avec la figure 4b comprend :
- les moyens de détection comportant le détecteur matriciel 10 IR à deux dimensions placé de manière classique dans le dispositif de refroidissement,
- le diaphragme d'ouverture 40 bordé du miroir de réduction de flux de structure,
- le ré-imageur 20' en configuration commune PC/GC s'il s'agit d'un imageur de type zoom, sans les éléments spécifiques au TGC si le ré-imageur est équipé d'un dispositif de changement de champ par insertion d'éléments optiques dans la combinaison,
- le dispositif de contre-balayage 80' bloqué dans une position fixe commune PC/GC.

Ces éléments sont montés sur la plate-forme 70' bloquée dans une position fixe commune PC/GC.

En mode TGC, le système 200 décrit en relation avec la figure 4c comprend :
- les moyens de détection comportant un détecteur matriciel 10 IR à deux dimensions placé de manière classique dans un dispositif de refroidissement tel qu'un cryostat ; en mode TGC c'est le diaphragme froid 11 du cryostat qui joue le rôle de pupille,
- le ré-imageur 20' en configuration TGC s'il s'agit d'un imageur de type zoom, ou alors incluant les éléments optiques supplémentaires spécifiques à la configuration TGC, si le ré-imageur est équipé d'un dispositif de changement de champ par insertion d'éléments optiques dans la combinaison,
- le dispositif de contre-balayage 80'.

Ces éléments sont montés sur la plate-forme 70' équipée de moyens de rotation en gisement pour obtenir le balayage de 90° du mode TGC.

Selon un autre mode de réalisation la plate-forme a deux degrés de liberté, en site et en gisement.

La plate-forme de balayage 70' et le dispositif de contre-balayage 80' sont contrôlés par l'unité de traitement 75.

## Revendications

1. Système (200) d'imagerie passive IR comprenant :
- un détecteur matriciel (10) IR,
- un dispositif optique bi-champ petit champ PC et grand champ GC, apte à former une image sur le détecteur et comportant sur un axe optique
des moyens de formation de l'image (20'),
un afocal (30) amovible de grossissement G déterminé placé en amont des moyens de formation de l'image,
un diaphragme d'ouverture (40) disposé entre le détecteur et les moyens de formation de l'image,
**caractérisé en ce qu'**en vue d'obtenir un système d'imagerie tri-champ apte à fonctionner en modes PC, GC ou très grand champ TGC, il comprend des moyens de balayage (70') en gisement de l'ensemble détecteur et dispositif optique bi-champ, destinés à être bloqués en modes PC et GC, **en ce que** le diaphragme d'ouverture (40) est amovible et destiné à être inséré dans les modes PC et GC et retiré dans le mode TGC, l'afocal amovible est destiné à être inséré dans le mode PC et retiré dans les modes GC et TGC et **en ce que** le dispositif optique comprend en outre, un miroir de contre-balayage (81) disposé sur ledit axe optique et apte à être bloqué en modes PC et GC, disposé en amont des moyens de formation de l'image, et **en ce que** les moyens de formation de l'image comprennent des moyens pour obtenir le champ TGC disposés sur ledit axe optique en mode TGC et aptes à former une image sur ledit détecteur (10).

2. Système d'imagerie selon la revendication précédente, **caractérisée en ce que** les moyens pour obtenir le mode TGC comportent des composants optiques amovibles aptes à être insérés sur l'axe optique entre le dispositif de contre-balayage et le détecteur en mode TGC et retirés en modes PC et GC.

3. Système d'imagerie selon la revendication 1, **caractérisée en ce que** les moyens pour obtenir un autre champ sont de type zoom, c'est-à-dire comprennent des éléments optiques (22, 23) mobiles en translation selon l'axe optique.

4. Système d'imagerie selon l'une quelconque des revendications précédentes, **caractérisé en ce que** le miroir de contre-balayage (81) est placé entre les moyens de formation de l'image et l'afocal.

5. Système d'imagerie selon l'une quelconque des revendications précédentes, **caractérisé en ce que** les moyens de formation de l'image présentant une ouverture déterminée, les moyens pour obtenir le mode TGC modifient cette ouverture.

6. Système d'imagerie selon l'une quelconque des revendications précédentes, **caractérisé en ce que** le miroir (81) de contre-balayage est disposé à 45° sur l'axe optique.

7. Système d'imagerie selon l'une quelconque des revendications précédentes, **caractérisé en ce que** le miroir de contre-balayage (81) est inclus dans un dispositif de contre-balayage (80') et **en ce que** la plate-forme de balayage (70') et le dispositif de contre-balayage (80') sont reliés à une unité de traitement (75) apte à les contrôler.

8. Système d'imagerie selon l'une quelconque des revendications précédentes, **caractérisé en ce que** le détecteur est placé dans un cryostat comportant un diaphragme froid (11).

## Patentansprüche

1. Passives IR-Bilderzeugungssystem (200), das Folgendes umfasst:
- einen IR-Matrixdetektor (10);
- ein optisches Zwei-Feld-(Schmalfeld (SF) und Breitfeld (BF))-Gerät zum Erzeugen eines Bildes auf dem Detektor und auf einer optischen Achse, das Folgendes umfasst:
Bilderzeugungsmittel (20');
eine stromaufwärts der Bilderzeugungsmittel platzierte bewegliche Afokaleinheit (30) mit ermittelter Vergrößerung G;
eine zwischen dem Detektor und den genannten Bilderzeugungsmitteln angeordnete Aperturmembran (40),
**dadurch gekennzeichnet, dass** es zum Erhalten eines Drei-Feld-Bilderzeugungssystems zum Arbeiten im SF-, BF- oder UBF- (ultrabreites Feld) Modus Mittel (70') zum Lageabtasten des Detektors und eine optische Zwei-Feld-Vorrichtungsbaugruppe umfasst, die so ausgelegt ist, dass sie im SF- und im BF-Modus blockiert wird, dadurch, dass die Aperturmembran (40) beweglich und dazu bestimmt ist, im SF- und BF-Modus eingesetzt und im UWF-Modus herausgenommen zu werden, wobei die bewegliche Afokaleinheit dazu bestimmt ist, im SF-Modus eingesetzt und im BF- und UBF-Modus herausgenommen zu werden, und dadurch, dass die optische Vorrichtung ferner einen Rückabtastspiegel (81) umfasst, der auf der optischen Achse angeordnet und so ausgelegt ist, dass er im SF- und im BF-Modus gesperrt ist, angeordnet stromaufwärts der Bilderzeugungsmittel, und dadurch, dass die Bilderzeugungsmittel Mittel zum Erhalten des UBF-Feldes umfassen, die auf der optischen Achse im UBF-Modus angeordnet und zum Erzeugen eines Bildes auf dem Detektor (10) ausgelegt sind.

2. Bilderzeugungssystem nach dem vorherigen Anspruch, **dadurch gekennzeichnet, dass** die Mittel zum Erhalten des UBF-Modus bewegliche optische Komponenten umfassen, die so ausgelegt sind, dass sie auf der optischen Achse zwischen der Rückabtastvorrichtung und dem Detektor im UBF-Modus eingesetzt und im SF- und im BF-Modus herausgenommen werden.

3. Bilderzeugungssystem nach Anspruch 1, **dadurch gekennzeichnet, dass** die Mittel zum Erhalten eines anderen Feldes vom Zoom-Typ sind, d.h. sie umfassen optische Elemente (22, 23), die translational entlang der optischen Achse beweglich sind.

4. Bilderzeugungssystem nach einem der vorherigen Ansprüche, **dadurch gekennzeichnet, dass** der Rückabtastspiegel (81) zwischen den Bilderzeugungsmitteln und der Afokaleinheit platziert ist.

5. Bilderzeugungssystem nach einem der vorherigen Ansprüche, **dadurch gekennzeichnet, dass** die Bilderzeugungsmittel eine bestimmte Apertur haben, wobei die Mittel zum Erhalten des UBF-Modus die Apertur modifizieren.

6. Bilderzeugungssystem nach einem der vorherigen Ansprüche, **dadurch gekennzeichnet, dass** der Rückabtastspiegel (81) in einem Winkel von 45° auf der optischen Achse angeordnet ist.

7. Bilderzeugungssystem nach einem der vorherigen Ansprüche, **dadurch gekennzeichnet, dass** der Rückabtastspiegel (81) in einer Rückabtastvorrichtung (80') enthalten ist, und dadurch, dass die Abtastplattform (70') und die Rückabtastvorrichtung (80') mit einer Verarbeitungseinheit (75) verbunden sind, die sie steuern kann.

8. Bilderzeugungssystem nach einem der vorherigen Ansprüche, **dadurch gekennzeichnet, dass** der Detektor in einem Kryostat platziert ist, das eine kalte Membran (11) umfasst.

## Claims

1. An IR passive imaging system (200) comprising:
- an IR matrix detector (10);
- a two-field (narrow field NF and wide field WF) optical device designed to form an image on said detector and on an optical axis comprising:
image formation means (20');
a movable afocal element (30) with a determined magnification G, placed upstream of said image formation means;
an aperture diaphragm (40) disposed between said detector and said image formation means,
**characterised in that**, in order to obtain a three-field imaging system designed to operate in the NF, WF or Ultra-Wide Field UWF modes, it comprises means (70') for location scanning the detector and bi-field optical device assembly, which is designed to be blocked in the NF and WF modes, **in that** said aperture diaphragm (40) is movable and is designed to be inserted in the NF and WF modes and withdrawn in the UWF mode, said movable afocal element is designed to be inserted in the NF mode and withdrawn in the WF and UWF modes, and **in that** said optical device further comprises a back-scanning mirror (81) disposed on said optical axis and designed to be blocked in the NF and WF modes, disposed upstream of said image formation means, and **in that** said image formation means comprise means for obtaining the UWF field disposed on said optical axis in the UWF mode and designed to form an image on said detector (10).

2. The imaging system according to the preceding claim, **characterised in that** said means for obtaining the UWF mode comprise movable optical components designed to be inserted on said optical axis between said back-scanning device and said detector in the UWF mode and withdrawn in the NF and WF modes.

3. The imaging system according to claim 1, **characterised in that** said means for obtaining another field are of the zoom type, i.e. they comprise optical elements (22, 23) that are translationally mobile along said optical axis.

4. The imaging system according to any one of the preceding claims, **characterised in that** said back-scanning mirror (81) is placed between said image formation means and said afocal element.

5. The imaging system according to any one of the preceding claims, **characterised in that** said image formation means have a determined aperture, with said means for obtaining the UWF mode modifying said aperture.

6. The imaging system according to any one of the preceding claims, **characterised in that** said back-scanning mirror (81) is disposed at 45° on said optical axis.

7. The imaging system according to any one of the preceding claims, **characterised in that** said back-scanning mirror (81) is included in a back-scanning device (80') and **in that** the scanning platform (70') and said back-scanning device (80') are connected to a processing unit (75) that is designed to control them.

8. The imaging system according to any one of the preceding claims, **characterised in that** said detector is placed in a cryostat comprising a cold diaphragm (11).
